**Europäisches Patentamt**

**European Patent Office**

**Office européen des brevets**

(19)

(11) Veröffentlichungsnummer: **0 012 987**
**B1**

(12)

# EUROPÄISCHE PATENTSCHRIFT

(45) Veröffentlichungstag der Patentschrift:
**05.08.81**

(51) Int. Cl.³: **G 03 B 41/18**

(21) Anmeldenummer: **79105256.6**

(22) Anmeldetag: **18.12.79**

(54) Einrichtung an einer Planfilmkassette, insbesondere einer Röntgenfilmkassette.

(30) Priorität: **29.12.78 DE 2856704**

(43) Veröffentlichungstag der Anmeldung:
**09.07.80 Patentblatt 80/14**

(45) Bekanntmachung des Hinweises auf die Patenterteilung:
**05.08.81 Patentblatt 81/31**

(84) Benannte Vertragsstaaten:
**BE CH FR GB IT NL SE**

(56) Entgegenhaltungen:
**US-A-2 878 389**

(73) Patentinhaber: **AGFA-GEVAERT Aktiengesellschaft,
Camera-Werk Patent- und Lizenzwesen Postfach,
D-8000 München 90 (DE)**

(72) Erfinder: **Bauer, Walter, Heinrich-Wieland-Strasse 178,
D-8000 München 83 (DE)**
Erfinder: **Kröbel, Heinz, Ahornring 49, D-8021 Taufkirchen
(DE)**
Erfinder: **Färber, Heinrich, Dietlindenstrasse 9,
D-8000 München 40 (DE)**

Einrichtung an einer Planfilmkassette, insbesondere einer Röntgenfilmkassette

Die Erfindung betrifft eine Einrichtung an einer Planfilmkassette, insbesondere einer Röntgenfilmkassette zum Schliessen der einen Bodenteil und einen Deckel aufweisenden Kassette, mit mindestens einem mittels einer Feder in Verschlussstellung gehaltenen Schieber mit Haken, welcher einen an dem Deckel vorgesehenen Vorsprung in Verschlussstellung hintergreift; vgl. US-A-2 878 389.

Bei Planfilmkassetten ist im allgemeinen der Kassettendeckel über ein Scharnier an einem Rand mit dem Bodenteil verbunden, wobei sich dann die Verschlusselemente entweder auf der dem Scharnier gegenüberliegenden Seite oder an den beiden von der Scharnierseite ausgehenden Seiten befinden. Es sind aber auch Kassetten bekannt, bei denen der Deckel im wesentlichen in einer parallelen Ausrichtung auf den Bodenteil gebracht wird und durch Verschlusselemente an mindestens zwei sich gegenüberliegenden Seiten befestigt wird.

Bei den Kassetten der eingangs genannten Art ist es nun im allgemeinen üblich, dass zum Zwecke des Verschliessens von der Bedienungsperson der Deckelteil auf den Bodenteil gedrückt wird, wobei der Schieber quer zur Verschlussrichtung des Deckels bewegt wird. Hierbei drückt im allgemeinen ein am Deckel angebrachtes Element auf eine Schrägfläche an dem am Bodenteil geführten Schieber, so dass dieser aus seiner Verschlussstellung verschoben wird. Dabei muss von der Bedienungsperson für diese Tätigkeit oft eine verhältnismässig grosse Kraft aufgewendet werden und es hat sich auch gezeigt, dass bei mehreren Verschlusselementen manchmal ein Verschlusselement nicht vollständig betätigt war, so dass die Kassette nach irgendeiner Handhabung an einer Ecke aufgesprungen ist.

Aufgabe der Erfindung ist es daher, eine Einrichtung der eingangs genannten Art zu schaffen, bei der ein leichtes und sicheres Verschliessen ermöglicht sein soll.

Diese Aufgabe wird durch die im Kennzeichen des Anspruchs 1 beschriebene Erfindung gelöst.

Mit der Erfindung wird erreicht, dass seitens der Bedienungsperson zum Schliessen des Kassettendeckels im wesentlichen nur noch die Deckelvorspannung überwunden werden muss. Ausserdem kann durch eine entsprechende Anbringung der Halteklinke gewährleistet werden, dass der Schieber erst dann in seine Verschlussstellung springt, wenn er den Kassettenhaken tatsächlich hintergreifen kann.

Weitere Einzelheiten und Vorteile der Erfindung ergeben sich aus den Unteransprüchen im Zusammenhang mit der Beschreibung eines Ausführungsbeispieles, das anhand von Figuren eingehend erläutert ist. Es zeigen:

Figur 1 einen Querschnitt durch eine geschlossene Kassette mit der erfindungsgemässen Einrichtung;

Figur 2 eine Teilansicht in vergrössertem Massstab der in Figur 1 dargestellten Verschlussvorrichtung bei geöffneter Kassette; und

Figur 3 der in Figur 2 dargestellte Ausschnitt bei geschlossener Kassette.

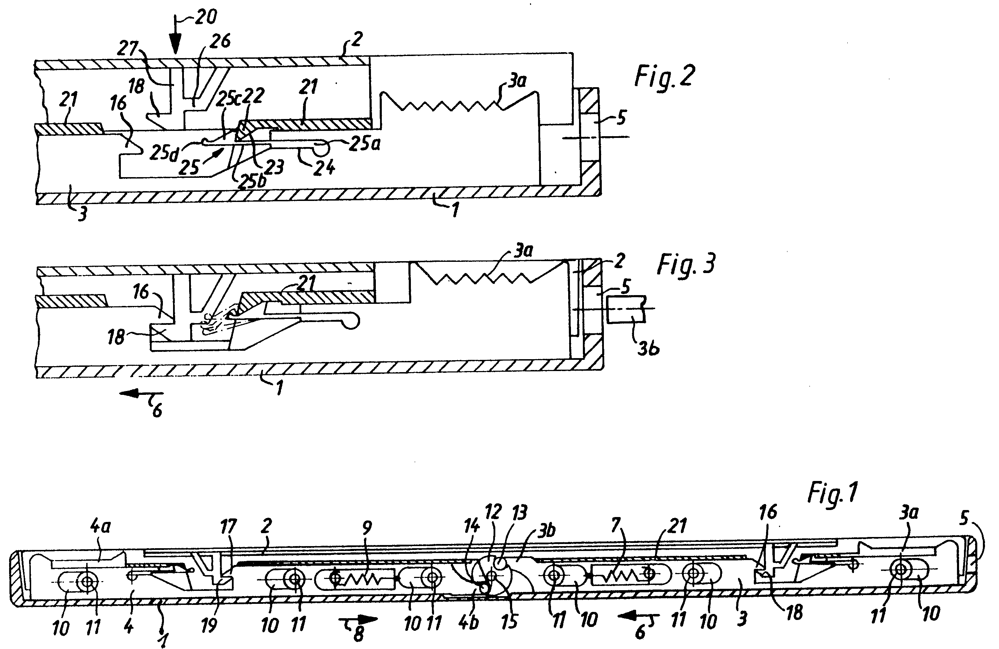

In Figur 1 ist mit 1 ein Bodenteil einer Röntgenfilmkassette bezeichnet, an dem über ein nicht dargestelltes Scharnier ein Deckel 2 angelenkt ist. An dem der Scharnierseite gegenüberliegenden Rand des Bodenteils 1 sind Schieber 3 und 4 vorgesehen, die in geeigneten Führungsmitteln an einer Seitenwand des Bodenteils 1 geführt sind. An den Schiebern 3 und 4 sind Betätigungselemente bzw. Griffstücke 3a bzw. 4a ausgeformt, welche bei geschlossenem Deckel 2 durch Aussparungen in diesem Deckel von aussen zugänglich sind. Die Schieber 3 und 4 können ausser von Hand auch durch einen Stift 36 eines Öffnungsmechanismus bedient werden, welcher durch eine Bohrung 5 in der Seitenwand des Bodenteils 1 auf die Seitenfläche des Griffstückes 3a bzw. 4a auftreffen kann.

Der Schieber 3 ist in Richtung des Pfeiles 6 verschiebbar und wird von einer am Bodenteil eingehängten Zugfeder 7 in der dargestellten Ruhestellung gehalten. In ähnlicher Weise ist der Schieber 4 in Richtung des Pfeiles 8 verschiebbar und wird von einer an der Kassette eingehängten Zugfeder 9 in der dargestellten Ruhestellung gehalten. Im übrigen weisen die Schieber 3 und 4 zu den Bewegungsrichtungen 6 und 8 parallel verlaufende Längsschlitze 10 auf, in welchen an der Seite des Bodenteils 1 angebrachte Zapfen 11 geführt sind.

An den sich gegenüberliegenden Enden der Schieber 3 und 4 ist jeweils ein Vorsprung 3b bzw. 4b ausgeformt. Der eine Vorsprung 3b ist an einem Ende eines Hebelelementes 12 in dem Drehpunkt 13 und der andere Vorsprung 4b an dem anderen Ende des Hebelelementes 12 in dem Drehpunkt 14 angelenkt, wobei das Hebelelement 12 in seiner Mitte um eine an der Seitenwand des Bodenteils 1 angebrachte Achse 15 drehbar gelagert ist. Zweckmässigerweise ist das Hebelelement 12 als kleines Rädchen ausgebildet, in welchem an den Anlenkstellen 13 und 14 ein radialer Schlitz vorgesehen ist, in welchen an den Vorsprüngen 3b bzw. 4b angebrachte Stifte geführt sind.

An den Schiebern 3 und 4 sind Haken 16 bzw. 17 ausgeformt, welche in der Ruhestellung der Schieber 3 und 4 zum Zwecke des Verschliessens am Deckel 2 angebrachte Haken 18 bzw. 19 hintergreifen.

Das Wesen der Erfindung soll nun anhand der Figuren 2 und 3 erläutert werden. Mit dem Bodenteil 1 ist eine L-förmige Schiene 21 verbunden, welche den Schieber 3 an zwei Seiten führt und diesen gegen die nicht dargestellte Seitenwand des Bodenteiles hält. Im Bereich der Verschlusshaken 16 und 18 weist diese Schiene 21 eine Aussparung auf. An einem Rand dieser Aussparung der Schiene 21 ist an dieser ein Vorsprung 22 mit einer Schrägfläche 23 ausgeformt. Im Schieber 3 ist ein Schlitz 24 ausgebildet, in welchen eine elastische Klinke 25 eingesetzt ist. Die elastische Klinke 25 weist ein in dem Schlitz 24 liegendes Halteteil 25a, ein federndes Mittelstück 25b und einen hakenartigen Vorsprung 25c auf. An dem hakenartigen Vorsprung 25c ist ferner eine Nase 25d ausgebildet.

An dem Kassettendeckel ist etwa an der Stelle der Nase 25d ein Anschlag 26 angebracht, der zweckmässigerweise einstückig mit dem Trägerteil 27 für den Haken 18 ausgebildet ist.

Die Wirkungsweise der anhand der Figuren 2 und 3 beschriebenen Einrichtung ist nun folgendermassen:

In Figur 2 ist die Kassette in geöffnetem Zustand dargestellt, das heisst, der Kassettendeckel 2 befindet sich unmittelbar oberhalb der Verschlussstellung und soll in Richtung des Pfeiles 20 zugedrückt werden. Der Schieber 3 befindet sich in einer Wartestellung, in welcher er gegen die Kraft der Feder 7 durch die Klinke 25 gehalten wird, welche mit ihrem Vorsprung 25c den Haken 22 der Schiene 21 hintergreift. Wird nun der Kassettendeckel 2 weiterhin in Richtung 20 auf das Bodenteil 1 gedrückt, so wird auch der Anschlag 26 am Deckel 2 auf die Nase 25d der Klinke 25 gedrückt, womit diese gemäss Figur 3 nach und nach auf das Bodenteil 1 zu bewegt wird. Sobald der Haken 25c aus dem Eingriff mit dem Vorsprung 22 der Schiene 21 gebracht ist, wird der Schieber 3 aufgrund der Kraft der Feder 7 gegen die Pfeilrichtung 6 bewegt, womit der Haken 16 des Schiebers 3 den Haken 18 am Deckel 2 hintergreift. Damit ist die Kassette an dieser Stelle verschlossen. Zum Zwecke des Öffnens wird nun von Hand das Griffstück 3a in Pfeilrichtung 6 bewegt. Ebenso kann der Schieber 3 auch durch den Stift 36 eines Öffnungsmechanismus in dieser Richtung bewegt werden. Dabei kommen zum einen die Haken 16 und 18 aus ihrem Eingriff und zum anderen wird die elastische Klinke 25 durch Entlanggleiten an der Schrägfläche 23 der Schiene 21 wieder in Richtung auf den Boden gebogen, solange, bis der Schieber 3 eine Stellung erreicht hat, in welcher die elastische Klinke mittels ihres Haken 25c aufgrund ihrer elastischen Eigenschaften hinter den Vorsprung 22 der Schiene 21 springt. Damit wird der Schieber 3 in der geöffneten Stellung gegen die Kraft der Feder 7 gehalten, bis der Deckel 2 erneut geschlossen wird.

In gleicher Weise ist die erfindungsgemässe Einrichtung auch an dem Schieber 4 vorgesehen. Durch die Verbindung der beiden Schieber 3 und 4 über das Hebelelement 12 braucht zum Zwecke des Öffnens nur ein Schieber betätigt zu werden. Selbstverständlich ist die erfindungsgemässe Einrichtung aber auch an voneinander getrennten Verschlüssen zu verwenden.

**Patentansprüche**

1. Einrichtung an einer Planfilmkassette, insbesondere einer Röntgenfilmkassette zum Schliessen der einen Bodenteil und einen Deckelteil aufweisenden Kassette, mit mindestens einem mittels einer Feder in Verschlussstellung gehaltenen Schieber mit Haken, welcher einen an dem Deckel vorgesehenen Vorsprung in Verschlussstellung hintergreift, gekennzeichnet durch eine elastische, den Schieber (3, 4) in einer den Vorsprung (18, 19) des Deckels (2) freigebenden Offenstellung haltende Klinke (25), welche von dem Deckel (2) zur Freigabe des Schiebers (3, 4) betätigbar ist.

2. Einrichtung nach Anspruch 1, dadurch gekennzeichnet, dass die Klinke (25) an dem Schieber (3, 4) angebracht ist und in der Offenstellung ein bodenteilfestes Element (22) hintergreift.

3. Einrichtung nach Anspruch 2, dadurch gekennzeichnet, dass mit dem Bodenteil (1) eine Schiene (21) mit Aussparungen verbunden ist und dass die Klinke (25) einen an der Schiene (21) ausgeformten Vorsprung (22) hintergreift.

4. Einrichtung nach einem der Ansprüche 1 bis 3, dadurch gekennzeichnet, dass an der Klinke (25) eine Nase (25d) vorgesehen ist, der gegenüber am Deckel (2) ein Anschlag (26) angebracht ist, welcher beim Schliessen unter Drücken auf die Nase (25d) die elastische Klinke (25) auslenkt.

5. Einrichtung nach einem der Ansprüche 1 bis 4, dadurch gekennzeichnet, dass an der Klinke (25) ein das bodenteilfeste Element hintergreifender Haken (25c) ausgeformt ist, der eine Schrägfläche aufweist, welche beim Betätigen des Schiebers (3, 4) mit einer schrägen, am bodenteilfesten Element (22) vorgesehenen Gegenfläche (23) zum Zwecke der Auslenkung der Klinke (25) zusammenwirkt.

**Claims:**

1. Device in a sheet film cassette, especially an X-ray film cassette, for closing the cassette which has a base part and a lid part, which device has at least one slide which is held in the locked position by means of a spring and has a hook that, in the locked position, engages behind a projection provided on the lid, characterised by a resilient catch (25) which holds the slide (3, 4) in an open position releasing the projection (18, 19) of the lid (2) and which can be actuated by the lid (2) in order to release the slide (3, 4).

2. Device according to claim 1, characterised in that the catch (25) is attached to the slide (3, 4) and, in the open position, engages behind an element (22) fixed to the base part.

3. Device according to claim 2, characterised in that a rail (21) having openings is connected to the base part (1) and that the catch (25) engages behind a projection (22) formed on the rail (21).

4. Device according to one of claims 1 to 3, characterised in that a nose (25d) is provided on the catch (25), opposite which nose there is attached to the lid (2) a stop (26) which, during the closing operation, deflects the resilient catch (25) by pressing on the nose (25d).

5. Device according to one of claims 1 to 4, characterised in that there is formed on the catch (25) a hook (25c) that engages behind the element fixed to the base part and has a sloping face which, when the slide (3, 4) is actuated, co-operates with a sloping opposed face (23) provided on the element (22) fixed to the base member, to deflect the catch (25).

**Revendications**

1. Dispositif pour cassette de film rigide, en particulier pour cassette de film radiographique, destiné à fermer la cassette présentant une partie de fond et un couvercle, comportant au moins un coulisseau avec crochets retenu en position de fermeture au moyen d'un ressort et qui s'engage en position de fermeture derrière une saillie prévue sur le couvercle, dispositif caractérisé par un verrou élastique (25) qui retient le coulisseau (3, 4) dans une position d'ouverture libérant la saillie (18, 19) du couvercle (2) et qui peut être actionné par le couvercle (2) pour la libération du coulisseau (3, 4).

2. Dispositif selon la revendication 1, caractérisé par le fait que le verrou (25) est disposé sur le coulisseau (3, 4) et s'engage, dans la position d'ouverture, derrière un élément (22) solidaire de la partie de fond.

3. Dispositif selon la revendication 2, caractérisé par le fait qu'à la partie de fond (1) est reliée une barre (21) présentant des échancrures et que le verrou (25) s'engage derrière une saillie (22) formée par la barre (21).

4. Dispositif selon l'une des revendications 1 à 3, caractérisé par le fait que le verrou (25) présente un bec (25d) en face duquel est disposée, sur le couvercle (2), une butée (26) qui, lors de la fermeture, dévie le verrou élastique (25) en poussant sur le bec (25d).

5. Dispositif selon l'une des revendications 1 à 4, caractérisé par le fait que le verrou (25) forme un crochet (25c) s'engageant derrière l'élément solidaire de la partie de fond et présentant une surface oblique qui, lorsqu'on actionne le coulisseau (3, 4), coopère avec une surface oblique complémentaire (23) prévue sur l'élément (22) solidaire de la partie de fond, afin de dévier le verrou (25).

Fig. 2

Fig. 3

Fig. 1